# EUROPEAN PATENT APPLICATION

(11) **EP 4 464 173 A2**
(43) Date of publication of application: **20.11.2024**
(21) Application number: 24205344.5
(22) Date of filing: 10.02.2021
(51) Int. Cl.: A23L 33/105, A23L 33/125, A23L 33/21, A23L 7/10, A23L 7/104, A23L 33/185

(54) **OAT DERIVED COMPOSITION**

(62) Divisional of application: 21705449.3
(71) Applicant: Oatly AB, 211 19 Malmö (SE)
(72) Inventor: EHLDE, Sofia, 211 19 Malmö (SE); PETERSSON, Karin, 211 19 Malmö (SE)
(74) Representative: AWA Sweden AB

(57) **Abstract**

The present invention relates to an oat derived composition comprising, by dry weight of the composition, 20-55% of oat protein, 5-20% of fat, 20-40% of dietary fiber, and 3-20% of carbohydrates, wherein 3-20% by dry weight of the composition, of the carbohydrates, are sugars, and wherein 80-99% by weight of the oat derived composition is dry matter. The present invention further relates to a method for manufacturing the oat derived composition, and a use of the oat derived composition as food additive or ingredient, or for food manufacturing.

## Description

### Technical field of invention

The present invention relates to an oat derived composition, and to a method for manufacturing the oat derived composition, and to a use of the composition.

### Background

There is a need and demand for improved nutritious products which can be used directly or be used as ingredients in cooking or manufacturing of food stuffs. Nutritious products having low impact on the environment and climate and which have an all-vegetable origin is further desirable.

It is a problem with several nutritious products that they contain a plurality of processed additives. Such processed additives may suffer from requiring considerable amounts of raw materials and energy during preparation and creating wastage of raw material.

Oat in different forms are known ingredients in healthy and nutritious foods. Further, oat meal or oat kernels are known for containing nutritious compounds. Oat may be considered a sustainable vegetable ingredient in food production. However, for some purposes it would be desirable with even improved properties of oat materials allowing it to be used in further applications. It would be desirable with obtaining such oat materials in environmentally friendly methods.

Thus, there is a need for providing improved nutritious edible oat products, or products to be used as food ingredients or raw material for food production, having low negative effects on health, environment and climate.

### Summary of invention

It is a purpose of the present invention to solve at least one problem or need of prior art. It is a further purpose to provide an oat derived product. It is a yet further purpose to provide an oat derived product for use in production of foodstuff.

According to a first aspect of the present inventive concept there is provided an oat derived composition comprising, by dry weight of the composition, 20-55% of oat protein, 5-20% of fat, 20-40% of dietary fiber, and 3-20% of carbohydrates.

Such an oat derived composition provides high nutritious values suitable for use as food ingredient. It may be noted that the protein and fibre levels are high. Suitably, such an oat derived composition may be used as food or feed, or as an ingredient in food preparation or manufacturing.

According to a second inventive concept, there is provided a method for manufacturing the oat derived composition according to the first inventive concept, the method comprising: providing an aqueous oat slurry comprising 10-30% by weight of micronised oats; separating, from the aqueous oat slurry, preferably by decanting, centrifugation, or filtration, or combinations thereof: a water rich fibre depleted slurry, and a water depleted fibre rich slurry comprising the oat derived composition and having a content of dry matter of 20-40%; optionally drying the water depleted fibre rich slurry; thereby obtaining the oat derived composition.

According to a third inventive concepts, there is provided a use of the oat derived composition according to the first inventive concept, or as provided by the second inventive concept, as food additive or ingredient, or for food manufacturing.

### Brief Description of the Drawings

Aspects of the present disclosure will now be described in more detail, with reference to the appended drawings showing embodiments of the invention, in which:
Fig. 1 schematically illustrates a method for manufacturing the oat derived composition according to embodiments.
Fig. 2 schematically illustrates a method for manufacturing the oat derived composition according to embodiments.

### Detailed description

The present invention will now be described more fully hereinafter. This invention may, however, be embodied in many different forms and should not be construed as limited to the embodiments set forth herein; rather, these embodiments are provided for thoroughness and completeness, and for fully convey the scope of the invention to a skilled person. Although individual features may be included in different embodiments, these may possibly be combined in other ways, and the inclusion in different embodiments does not imply that a combination of features is not feasible. In addition, singular references do not exclude a plurality. In the context of the present invention, the terms "a", "an" does not preclude a plurality.

The present inventive concepts are, at least in part, based on unexpected realisations that nutritious oat derived composition may be obtained and provided having several desirable properties over known oat products. Further, ways have been discovered allowing the oat derived composition to be manufactured without unnecessary waste material being produced as byproduct. It has further been realised that the oat derived composition may be manufactured while at the same time a useful liquid oat product is obtained, essentially without other by-products from the process. The, thus obtained, liquid oat product may be used for providing an oat drink. Thereby, the oat derived composition may be provided or manufactured without, or with minimum, waste of edible material. Further, the oat derived composition may be obtained as a side or residual product from manufacturing of oat drink. For example, use of the oat derived composition may in addition to be of high nutritional value as described herein, also be of value for reducing or avoiding waste from manufacturing of oat drink.

By treating an oats material in aqueous phase, such as micronized oats in aqueous phase, in an enzymatic process as described herein, the oat derived composition may be obtained from the aqueous phase, which composition may be described as rich in, for example, dietary fibre, protein, and fat while being low in carbohydrates. Further, the level of β-glucan may be at same level or higher as in untreated oats material.

"Oat derived", as used herein, refers to that the composition at least to a major part, preferably entirely, may be derived from, obtained from or manufactured from oats material. For example, the oats material may be oat kernels, or part of oat kernels. Oat derived composition may, thus and for example, refer to a composition manufactured from micronized oat kernels wherein the manufacturing may comprise modifications to components of the oats material, such as, for example, treatment by enzymes, whereby components originally present in the oats material may be transformed and/or removed.

According to a first aspect of the present inventive concept there is provided an oat derived composition comprising, by dry weight of the composition, 20-55% of oat protein, 5-20% of fat, 20-40% of dietary fiber, and 3-20% of carbohydrates.

Such an oat derived composition provides high nutritious values suitable for use as food ingredient. It may be noted that, for example, the protein and fibre levels are high. Suitably, such an oat derived composition may be used as food or feed, or as an ingredient in food preparation or manufacturing. Carbohydrates may refer to carbohydrates other than fibres but including one or more of sugars and starch.

The oat derived composition may be a particulate oat derived composition.

The oat derived composition may, to a major part by dry weight of the composition, be in form of particles. Essentially all of the oat derived composition may be in form of particles.

A major part of a weight of the particles, or the composition, may be particles having sizes within the range from 90 µm to 1 mm, preferably at least 90% of the weight of the particles, or the composition, may be particles having sizes within the range from 90 µm to 1 mm. This may be determined by a major portion, or at least 90% of the weight of the particles, or the composition, in dry form passes a 1 mm sieve but is retained by a 90 µm sieve. It shall be realized and appreciated that this is only an example of sizes which has been realized with an embodiment, and that other sizes and fractions of particles of the powder may be obtained in accordance with embodiments. The sizes may be controlled or defined by, for example, the drying of the oat derived composition, and/or by mechanical processes. Further, sizes of particles of the micronized oats used in manufacturing of the oat derived composition may determine or have an effect on the sizes of the particles. Other process parameters of the manufacturing of the oat derived composition may alternatively or additionally have an effect on the particle size, such as for example treatment of the micronized oats, for example degradation of starch or release of compounds from the micronized oats, but also from other type of treatments including mechanical treatment. Thus, the sizes of particles of the oat derived composition may be controlled and/or defined and/or affected by, for example, sizes and treatment of particles of the micronized oats. The oat derived composition may be treated to grinding or milling, optionally followed by sieving or other means of size fractioning, to provide a particulate oat derived composition with a desirable distribution of particles. Sizes of the particles may be subjected to change, for example dependent on level of moist/water. The oat derived composition, or particles of the oat derived composition, may typically swell with increased level of moist. Therefore, it may be suitable to provide particle sizes together with water content of the particles or composition.

It shall be realized that the oat derived composition may partially, for example to a major part, or fully, be considered to be composed or consist of particles, although it may not be in form of a free flowing powder. The oat derived composition in form of a powder comprising particles, may, for example, when wetted or moisturized, or compacted, obtain a form of eg. a cake or body, still comprising particles from the previous powder form.

Of the dietary fiber, 2-9%, by dry weight of the composition, may be β-glucan.

The oat derived composition may be an oat derived composition manufactured from an oats material, for example oat kernels or oat meal.

The fat may be referred to as oat fat, or fat naturally occurring in oats.

The carbohydrates may essentially be free from starch.

3-20%, such as 5-15%, by dry weight of the composition, of the carbohydrates, may be sugars.

The sugars may be selected from one or more of monosaccharides, disaccharides, trisaccharides and olifosaccharides.

Essentially all of the carbohydrates may be sugars.

A major portion of the sugars may be maltose. For example, 5 to 15 percent, by dry weight of the composition, may be maltose.

The oat derived composition may further comprise, by dry weight of the composition, 0-15%, preferably 2-10% of ash. Ash in this context refers to inorganic residues remaining after essentially complete oxidation of the oat derived composition.

The water content of the composition may be in the range of 0 to 80%, by weight. The higher end of the range may describe the oat derived composition as obtained from manufacturing of the composition after the separating, and the lower end of the range may describe the oat derived composition as obtained from drying of the composition from the separating.

In particular, the water content of the composition may be 1-20% by weight of the composition, or 5-15%, or 5-10% by weight of the composition. Such water content may be obtained by drying, and may lend the composition and the composition in powder form suitable handling properties and desirable shelf life. Alternatively, the water content of composition may be 60-80% by weight of the composition.

The water content of 1-20% may be obtained by drying of the composition having a water content of 60-80%, for example drying by means of a flash dryer or a whirl flash.

In particular, the water content of the composition may be around or below 12%, such as below 10% by weight of the composition.

50% or more, such as 60% or more, or 90% or more, by weight of the sugar of the composition, may be maltose. The maltose may be from degradation of starch from oats material, for example using enzymatic degradation, for example using amylase, such as α- or β-amylase.

When the oat derived composition to a major part by dry weight of the composition is in form of particles, at least a major portion of individual particles may be characterized by a content of the oat derived composition, i.e. by having a content as specified by claims or embodiments herein. Alternatively, individual particles may be characterized by having a content which differs from the overall content of the composition, for which case a mean content of all particles may be characterized by the content of the composition.

The oat derived composition is described by content as dry weight of the composition. It shall be understood and is discussed herein that the composition may be provided having different content of water.

The oat derived composition may further comprise other compounds than the discussed protein, fibre, carbohydrates etc. The oat derived composition may be mixed or otherwise provided together with additional compounds or ingredients and and used as a mix, for example in manufacturing of food.

The balance of the composition, up to 100% the weight of the composition, may be other additives, ingredients or compounds, preferably oat derived.

The oat derived composition may be in form of a powder.

In particular, a dried particulate oat derived composition may be in form of a powder, or the oat derived composition may be an oat derived powder composition. For example, a particulate oat derived composition having a water content of the composition being 1-20% by weight of the composition, or 5-15%, or 5-10%, may be in form of a powder. Such dried powder may be characterized by having free flowing properties, and may be fractionated using eg. sieving.

The oat derived composition in form of a powder, may be characterized by comprising or consisting of the particulate oat derived composition. oThe oat derived composition in form of a powder comprising particles, may, for example, when wetted or moisturized, or compacted, obtain a form of eg. a cake or body, still comprising particles from the previous powder form.

The fat may comprise or consist of 15-25% saturated fat, 30-50% mono-unsaturated fat, and 30-50% poly-unsaturated fat.

According to a second inventive concept, there is provided a method for manufacturing the oat derived composition according to the first inventive concept, the method comprising: providing an aqueous oat slurry comprising 10-30% by weight of micronised oats; separating, from the aqueous oat slurry, preferably by decanting, centrifugation, or filtration, or combinations thereof: a water rich fibre depleted slurry, and a water depleted fibre rich slurry comprising the oat derived composition and having a content of dry matter of 20-40% by weight; optionally drying the water depleted fibre rich slurry; thereby obtaining the oat derived composition.

The aqueous oat slurry may comprise 10-25%, such as 16-20%, by weight, of micronised oats.

The water rich fibre depleted slurry may have a content of dry matter of 5-20%, such as, for example, 10-20% or 13-16% by weight. The water rich aqueous oat slurry comprising 10-30% by weight of micronised oats, may, for example, be provided as micronized oats such as oat flour, mixed with water, and optionally other additives, or, for example, provided by micronizing oat material in aqueous solution, for example as part of the method.

Separating, from the aqueous oat slurry, preferably by decanting, centrifugation, or filtration, or combinations thereof, provides separation of the aqueous oat slurry into two slurries, or phases, for example streams or batches. One phase is a water rich fibre depleted slurry, and another phase the water depleted fibre rich slurry comprising the oat derived composition and having a content of dry matter of 20-40%. Rich and/or depleted are terms used in this context to compare content of water and fibre between the two phases. Rich denotes a higher content and depleted a lower content. The, thus, separated fibre rich slurry comprising the oat derived composition may be considered as the oat derived composition, and may be the composition according to the first aspect. If the water content and/or content of dry matter is considered desired or suitable, the oat derived composition may be considered achieved from the separating. Optionally, the separated fibre rich slurry may be further dried if a lower water and/or higher content of dry matter is desired. For example, the water content of the dried oat derived composition may be 1 to 15%, such as 5 to 10%.

Although the slurry comprising the oat derived composition is described as being water depleted and fibre rich, it shall be understood and appreciated that it may have a content, and may be rich in, other components also, such as, for example rich in components selected from oat protein, of fat, and β-glucan. Fibre may comprise one or more of, for example, dietary fiber, and β-glucan.

The separating may be selected from decanting and centrifugation, or combinations thereof.

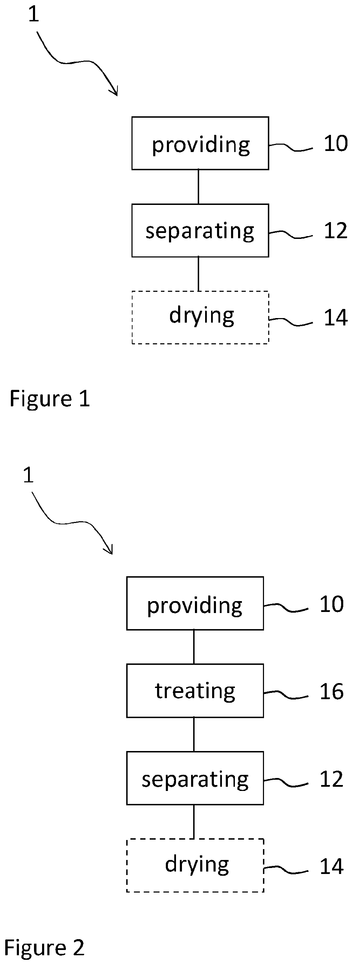

With reference to figure 1, a method for manufacturing of oat derived compositions will now be described. The method 1 comprises: providing 10 an aqueous oat slurry comprising 10-30%, for example, 5-20% by weight of micronised oats; separating 12, from the aqueous oat slurry, by decanting, centrifugation or filtration: a water rich fibre depleted slurry, and a water depleted fibre rich slurry comprising the oat derived composition and having a content of dry matter of 20-40%; optionally drying 14 the water depleted fibre rich slurry, thereby obtaining the oat derived composition. The box in figure 1 indicating the drying 14 is drawn with dotted lines in an attempt to illustrate the drying being optional. Thus obtained oat derived compositions may suitably be dried as described herein. The composition may be dried to a content of dry matter of 80-99%, preferably 85-95%, such as 90-95%. Further, the oat derived composition, suitably when dried, may be provided in form of a powder. It has been found that the dried compositions and the powder compositions have a long shelf life. Further, they are easy to handle, for example they are pourable and, thus, easy to measure.

The method may comprise said drying the water depleted fibre rich slurry to a content of dry matter of 80-99%, preferably 85-95%. The method may further comprise providing a powder comprising particles of the oat derived composition. A major part of the weight of the composition may consists of particles having sizes within the range from 90 µm to 1 mm. Such drying and powder allows for efficient handling of the oat derived composition and long shelf life.

Said drying and/or said providing a powder may be performed using a flash dryer. For example, a Whirl Flash may be used. For example, wind sifting may be used for size-fractionising of the powder. For example, drying or sifting may assist or be used for breaking up larger populations of particles. Said drying may be performed at temperatures within the range from 100°C to 300°C, for example 150°C to 275°C, or 160°C to 260°C.

Said separating may be preceded by treating the aqueous oat slurry such that at least a portion of starch from the micronized oats are solubilized or degraded. Thereby, in combination with, for example, the separating by decanting, centrifugation, or filtration, or combinations thereof, starch and/or degraded components from the starch may further be depleted from the fibre rich phase, while other components desirable to the oat derived composition is enriched in the fibre rich phase and thereby in the oat derived composition.

Solubilising or degrading the starch may be by providing conditions for degrading the starch in finer components. Suitably enzymatic treatment is used, such as treatment with amylase. Thus, the treating may be contacting with enzymes. The treating may further comprise a contacting or holding time of several minutes or hours, or to an extent necessary for obtaining desired degradation of starch. A major portion, up to essentially all, of starch present in the micronised oats may be treated and/or degraded.

With reference to figure 2, a method for manufacturing of oat derived compositions comprising the treating will now be described. The oat derived compositions were manufactured according to a method 1 as was described with reference to figure 1, with addition of said separating 12 being preceded by treating 16 the aqueous oat slurry such that at least a portion of starch from the micronized oats are degraded. Said treating may be performed by contacting the aqueous oat slurry with amylase. A method for manufacturing of the oat derived composition comprising treating the aqueous oat slurry enzymatically is described in further detail in Example 3.

Said treating the aqueous oat slurry such that at least a portion of starch from the micronized oats are degraded, may be performed by contacting the aqueous oat slurry with amylase. Other enzymes may be used alternatively or in combination. For example, one or more of α-amylase and β-amylase may be used.

It shall be appreciated that the water rich and fibre depleted slurry may be used for various purposes, such as for example in providing food stuffs or drinks, for example drinks sometimes referred to as oat drinks. Thereby, it will be appreciated that with the present invention, a major part, or even the entire part, of the oat material used as raw material in the method may be used or taken care of, thereby minimizing or essentially completely avoiding non-useful waste. The oat derived composition may be a residual product, from manufacturing of another product, for example a residual product from manufacturing of oat drink.

The oat derived composition may, thus, be obtained or manufactured, as a side or residual product from manufacturing of oat drink. Use of the, thus obtained, oat derived composition may in addition to be of high nutritional value and be used in food production as described herein, also be of value for reducing or avoiding waste from manufacturing of oat drink.

The method for manufacturing the oat derived composition comprising treating the aqueous oat slurry with amylase or other starch degrading enzyme, may comprise separating a water rich fibre depleted slurry in form of oat drink, and a water depleted fibre rich slurry comprising the oat derived composition. It has been realized that a side- or by-stream product from manufacturing of oat drink may provide excellent dietary properties in combination with being suitable for use as in food or feed production. The oat derived composition may be obtained from manufacturing of oat drink.

According to a third inventive concept, there is provided a use of the oat derived composition according to the first inventive concept, or as provided by the second inventive concept, as food additive or ingredient, or for food manufacturing. The oat derived material with the characteristic levels of nutrients as described herein, may provide for or be used in efficient production of nutritious food stuffs.

Further, the oat derived composition may be used as feed, or feed additive or ingredient, or for feed manufacturing.

Herein below follows examples and description of experiments further explaining and illustrating embodiments.

### EXAMPLE 1 - Analysis of dried and wet oat derived compositions

Four samples of the oat derived composition having a water content of approximately 10%, i.e. in the range of 5-15%, referred in this section as dried samples, and nineteen samples of the oat derived composition having a water content of approximately 67%, i.e. in the range of 60-80%, referred in this section as wet samples, were manufactured and analysed. The dried samples were obtained by drying wet samples. Drying was conducted using a Whirl Flash. The samples were analysed and the results are listed in table 1. The values for carbohydrates were not obtained from analysis but from calculations according to the following formula: (Carbohydrates in g/(100 g)) = 100 - (protein in g/(100 g)) - (fat in g/(100 g)) - (water content in g/(100 g))-(ash in g/(100 g)) - (alcohol in g/(100 g)) - (dietary fibre in g/(100 g))-(organic acids in (g/100 g). Therefore, for a given sample, there may be a lower value obtained for starch than for sugar.

**Table 1: Results from analysis of wet and dry samples of oat derived composition. Mean values from 19 wet and 4 dried samples are displayed. All values are expressed as g/(100 g) of dry weight. Values for carbohydrates in tables 1 to 3 include values for sugar. DF denotes dietary fibres. *Sugars is the total sum of Glucose, Fructose, Sucrose, and Maltose.**

| | **Protein** | **DF** | **Soluble DF** | **Beta-glucan** | **Fat** | **Maltose** | **Sugars*** | **Carbo-hydrate** | **Ash total** |
|---|---|---|---|---|---|---|---|---|---|
| **wet samples** | 32,0 | 34,1 | 3,2 | 5,9 | 14,6 | 9,3 | 9,7 | 11,8 | 6,6 |
| **dried samples** | 39,0 | 30,8 | 4,5 | 3,9 | 13,0 | 8,6 | 9,0 | 10,7 | 6,5 |

It shall be noted that the dried samples were not dried samples of the wet samples of table 2. Therefore, variations for example in oat raw material and the manufacturing process may have an effect on the results. It was concluded from the experiments that the drying the oat derived composition provides oat derived compositions having desirable nutritional properties.

### EXAMPLE 2 - Comparing the oat derived composition with other available oat based products.

Nutritional values for commercially available products based on oats have been reviewed and displayed in table 2. Data for the oat derived composition according an embodiment of the present invention has been retrieved from table 1, wet samples, and is included in table 2 for comparing.

**Table 2: Nutritional values for commercial oat products, with values as disclosed by provider. Values expressed as g/(100 g of product), dry weight.**

| **Product** | **Protein** | **DF** | **Beta-glucan** | **Fat** | **Sugars** | **Carbohydrate (incl. sugars)** |
|---|---|---|---|---|---|---|
| Oat bran 1 | 19 | 18 | N/A | 7.0 | 3.2 | 45 |
| Oat bran 2 | 19 | 18 | N/A | 8.5 | 2.5 | 39 |
| Oat meal 1 | 12 | 8.5 | 4.0 | 7 | 1.2 | 60 |
| Oat drink | 10.5 | 8.4 | 4 | 5.3 | 40 | 42 |
| Invention | 32 | 34 | 5.9 | 14.6 | 9.7 | 11.8 |

Oat bran 1 and 2 are commercially available products obtained from micronized hard outer layers of oat kernels/grains. Oat bran is known for being a product high in fibre and protein. Oat meal 1 is a commercially available, non-micronised oat product prepared from heat treated and rolled oat kernels. Thus, the oat meal may be considered similar to the raw material used in manufacturing of the oat derived composition according to embodiments described herein.

It can be concluded from data of table 2 that the oat derived composition according to embodiments have unique values and properties when compared to the commercially available products. The levels of proteins and fibre are considerably higher than in all compared products, even the oat bran products known and sold for their high content of fibre. Also, the fat levels for the oat derived composition is considerably higher. Thereby, for example if used in food production, fat as additive may not be desired or needed. Also, the sugar level is higher than in all compared products, while notably the total levels of carbohydrates and sugar is considerably lower than in all compared products. The levels of β-glucan is higher than in the oat meal, and if the levels of β-glucan in the dried product in table 1 is compared it is similar to the oat meal.

Vegetable products with high levels of proteins, vegetable products with high levels of fibre, vegetable products with high levels of fat, and vegetable products with low levels of carbohydrates is often desired and sought after in preparation of food and foodstuffs, with the present invention, a single product or composition provides high levels of all of protein, fibre, and fat, and low level of carbohydrates, is provided. Furthermore, the present invention provides high levels of β-glucan, even when compared with oat meal.

The composition therefore may provide desired and unique properties and nutritional values not found in other available products or raw materials. The composition may be of high value when used eg. in food production.

### EXAMPLE 3 - manufacturing of oat derived composition

We will now discuss examples of a manufacturing method comprising treating with enzymes, in this example α- and β-amylase, although it shall be realised that other ways of treating may be possible, such as using other enzymes or alternative amylase enzymes. The oat derived product of this example was provided both as (i) having a water content within the range of 60-80% by weight of the composition, or having a dry matter content of 20-40% by weight of the composition, and (ii) having a content of dry matter of 80-99%, more specifically 90-95% by weight of the composition by drying provided as a powder.

Aqueous oat slurry comprising 20% by weight of micronised oats were obtained from oat kernels by wet milling in aqueous solution being water. Although 20% was used for the present example, other concentrations may equally suitably be used, suitably within the range of 10-30%. Heat treated and non-heat treated oat kernels may be used. In this example, the oat kernels were peeled. Wet milling was used as it was available, but other means of micronizing the oat kernels may be used alternatively. The aqueous oat slurry may, for example, alternatively be directly provided by mixing oat flour in aqueous solution, such as water. In the present example, the aqueous oat slurry was then enzymatically treated at suitable elevated temperature. In the present example with amylase was used. The aqueous oat slurry was treated until most of the present starch was degraded. For example, α-amylase and/or β-amylase may be used for this purpose. The, thus treated, aqueous oat slurry then underwent separation. For the samples decanting was used, but filtration or centrifugation may alternatively be used, as well as combinations of two or more separation techniques, resulting in a water rich fibre depleted slurry, and a water depleted fibre rich slurry comprising the oat derived composition. The separation was conducted such that the water depleted fibre rich slurry had a content of dry matter of approximately 30%; while remaining dry matter from the aqueous oat slurry was present in the water rich fibre depleted slurry reaching around approximately 15% dry matter by weight. The, thus obtained, water depleted fibre rich slurry is characterized as the oat derived composition and may be used as is or further treated if desired. Several samples of the oat derived composition were obtained as described hitherto, as indicated in table 3 as wet samples. Although referred to as wet samples, such samples have a characteristic of and may be described as a moist cake or having a wet or moist solid structure. Other samples manufactured this way, were further treated to drying. For the present example, a Whirl Flash was used for drying. Drying was conducted so that the oat derived samples had a content of dry matter of approximately 90-95%. During drying the oat derived composition turned into a powder. Five dried samples were analysed and results are presented in table 3, referred to as dried samples.

### Dried and wet samples were analysed, as discussed with reference to

Table 1, and analysis data are presented in table 3. Dried samples further underwent wind sieving, from which it was concluded that a major part of a weight of the powder, for the present example approximately 90%, consisted of particles having sizes within the range from 90 µm to 1 mm.

The water rich fibre depleted slurry may be characterised as a liquid product, which may be used, for example, as a drink or further treated to be used as a drink.

It may be concluded from the above example, and data from table 3, that the method for manufacturing of the oat derived composition according to the example and embodiments provided wet oat derived compositions with a content of dry matter within the range 20-40%, by weight of the composition, and dried oat derived compositions in form of a powder having a dry content within the range of 80-99%. It shall be realised and appreciated that any content of dry matter between 20% to 99% may be achieved from drying to desired level drying of the oat material provided by the method. It has been found particularly desirable with above 80% dry matter, more desirable in the range of 85-99%, and even more desirable in the range of 85-95%, for reasons including that such a composition provides desirable stability and with relatively low consumption of energy for drying. Compositions with a content of dry matter within the range 20-40% benefits from being directly available via the method as this level of dryness was achievable with eg decanting, without further drying.

Taking care of and further using both the water rich fibre depleted slurry, and the oat derived composition allows use of essentially all oat material entering a process using the method, i.e. indicating a process essentially without waste products.

**Table 3: Analysis data from wet and dry samples of oat derived compositions. All values are expressed as g/(100 g) of dry weight. DF denotes dietary fibres. *Sugars is the total sum of Glucose. Fructose Sucrose, and Maltose.**

| **Sample** | **Protein** | **DF** | **Beta-glucan** | **Fat** | **Maltose** | **Sugars*** | **Carbo-hydrate (incl. sugars)** | **Ash** |
|---|---|---|---|---|---|---|---|---|
| **Wet 1** | 26,7 | 38,7 | 7,9 | 12,9 | N/A | N/A | N/A | N/A |
| **Wet 2** | 31,6 | 34,7 | 7,7 | 14,0 | N/A | N/A | N/A | N/A |
| **Wet 3** | 29,0 | 34,2 | 7,9 | 14,4 | N/A | N/A | N/A | N/A |
| **Wet 4** | 34, 6 | 32,5 | 6,9 | 13,4 | N/A | N/A | N/A | N/A |
| **Wet 5** | 29,2 | 33,4 | 6,1 | 16,3 | N/A | N/A | N/A | N/A |
| **Wet 6** | 29,9 | 34, 4 | 6,9 | 17,2 | N/A | N/A | N/A | N/A |
| **Wet 7** | 33,7 | 31,3 | 5,5 | 14,7 | N/A | N/A | N/A | N/A |
| **Wet 8** | 31,2 | 31,8 | 5,2 | 10,7 | N/A | N/A | N/A | N/A |
| **Wet 9** | 33,8 | 33,8 | 5,8 | 17,0 | 10,2 | 10,6 | 8,5 | 6,9 |
| **Wet 10** | 37,1 | N/A | 5,2 | 14,1 | 10,3 | 10,8 | N/A | 6,6 |
| **Wet 11** | 31,2 | 34,8 | 4,8 | 12,7 | 10,6 | 11,1 | 14,4 | 6,9 |
| **Wet 12** | 34,2 | 35,6 | 5,8 | 13,0 | 9,8 | 10,3 | 10,3 | 6,9 |
| **Wet 13** | 40,0 | 29,2 | 4,8 | 14,3 | 8,4 | 8,7 | 11,7 | 4,8 |
| **Wet 14** | 35,6 | 28,5 | 5,3 | 13,4 | 8,6 | 9,0 | 16,9 | 5,5 |
| **Wet 15** | 23,9 | 37,9 | 6,2 | 14,8 | 8,5 | 8,9 | 16,2 | 7,2 |
| **Wet 16** | 31,4 | 36,0 | 5,0 | 16,8 | 8,9 | 9,3 | 9,1 | 6,8 |
| **Wet 17** | 31,2 | 34,8 | 4,1 | 16,9 | 9,9 | 10,3 | 10,0 | 7,1 |
| **Wet 18** | 32,2 | 38,3 | 6,6 | 17,3 | 7,4 | 7,8 | 5,2 | 7,0 |
| **Wet 19** | 31,4 | 33,2 | 4,6 | 13,7 | 9,4 | 9,8 | 15,3 | 6,4 |
| **Dried 1** | 47.0 | 24.1 | 3.2 | 11.4 | 8.2 | 8.6 | 11.9 | 5.7 |
| **Dried 2** | 39.1 | 30.6 | 4.6 | 13.5 | 8.2 | 8.7 | 9.8 | 7.0 |
| **Dried 3** | 38.3 | 34.6 | N/A | 13.4 | 8.9 | 9.3 | 7.3 | 6.4 |
| **Dried 4** | 31.6 | 34.1 | N/A | 13.6 | 9.0 | 9.4 | 13.7 | 7.0 |
| **Dried 5** | 31.6 | 32.5 | N/A | 14.9 | 8.9 | 9.3 | 14.3 | 6.8 |

### EXAMPLE 4 - Drying of oat derived composition

Several experiments with drying have been conducted by means of a whirl flash within the temperature range from 100°C to 300°C, and in particular within the range 160°C to 300°C, including drying at 180°C, 200°C, 220°C, 240°C, 250°C, 260°C, and 280°C. Wet samples manufactured similar to the description of Example 3 and having a water content around 70% by weight were dried to dried samples having a water content around 10% by weight, typically ranging between 9 and 13% by weight.

It was concluded from the experiment that samples of the oat derived product were very easy to dry and that the drying provided a powder from the samples. A change in colour could be noted between 180 and 240°C, at or below 180°C, a brighter colour of the product was registered. 180°C was selected as a suitable drying temperature in prepration of several dried oat derived samples.

Notably, similar nutritious values of dried oat derived composition obtained from drying at 180°C and 240°C were obtained for analysis.

### Itemised list of variants of aspects

Item 1. Oat derived composition comprising, by dry weight of the composition,
20-55% of oat protein,
5-20% of fat,
20-40% of dietary fiber, and
3-20% of carbohydrates.

Item 2. The oat derived composition according to item 1, wherein the oat derived composition to a major part by dry weight of the composition is in form of particles.

Item 3. The oat derived composition according to item 1 or 2, wherein 2-9% by dry weight of the composition, of the dietary fiber is β-glucan.

Item 4. The oat derived composition according to any one of the previous items, wherein 3-20%, or 5-15%, by dry weight of the composition, of the carbohydrates are sugars.

Item 5. The oat derived composition according to any one of items 1 to 4, further comprising, by dry weight of the composition,
0-15%, preferably 2-10% of ash.

Item 6. The oat derived composition according to any one of the previous items, wherein the water content of the composition is 1-20% by weight of the composition, or 5-15%, or 5-10%.

Item 7. The oat derived composition according to any one of items 1 to 5, wherein the water content of the composition is 60-80% by weight of the composition.

Item 8. The oat derived composition according to any one of items 5 to 7, wherein 50% or more, such as 60% or more, or 90% or more, by weight of the sugar of the composition is maltose.

Item 9. The oat derived composition according to any one of items 2 to 8, wherein individual particles of the oat derived composition are characterized by a content of the composition.

Item 10. The oat derived composition according to item 6 in form of a powder.

Item 11. The oat derived composition according to any one of the previous items wherein the fat comprises 15-25% saturated fat, 30-50% mono-unsaturated fat, and 30-50% poly-unsaturated fat.

Item 12. Method (1) for manufacturing the oat derived composition according to any one of items 1 to 11, the method comprising:
providing (10) an aqueous oat slurry comprising 10-30% by weight of micronised oats,
separating (12), from the aqueous oat slurry, preferably by decanting, centrifugation, or filtration:
   a water rich fibre depleted slurry, and
   a water depleted fibre rich slurry comprising the oat derived composition and having a content of dry matter of 20-40%,
   optionally drying (14) the water depleted fibre rich slurry, thereby obtaining the oat derived composition.

Item 13. The method for manufacturing the oat derived composition according to item 12, comprising said drying the water depleted fibre rich slurry, to a content of dry matter of 80-99%, preferably 85-95%, and, optionally,
the method further comprising providing a powder comprising particles of the oat derived composition, wherein a major part of the weight of the composition consists of particles having sizes within the range from 90 µm to 1 mm.

Item 14. The method for manufacturing the oat derived composition according to item 13, wherein said drying and/or said providing a powder is performed using a flash dryer.

Item 15. The method for manufacturing the oat derived composition according to anyone of items 12 to 14, wherein said separating is preceded by: treating the aqueous oat slurry such that at least a portion of starch from the micronized oats are degraded.

Item 16. The method for manufacturing the oat derived composition according to item 15, wherein said treating the aqueous oat slurry such that at least a portion of starch from the micronized oats are degraded, is performed by contacting the aqueous oat slurry with amylase.

Item 17. Use of the oat derived composition according to any one of items 1 to 11, or manufactured by the method according to any one of items 12 to 16, as food additive or ingredient, or for food manufacturing.

## Claims

1. Oat derived composition comprising, by dry weight of the composition, 20-55% of oat protein,
5-20% of fat,
20-40% of dietary fiber, and
3-20% of carbohydrates,
wherein 3-20% by dry weight of the composition, of the carbohydrates, are sugars, and
wherein 80-99% by weight of the oat derived composition is dry matter.

2. The oat derived composition according to claim 1, wherein the oat derived composition to a major part by dry weight of the composition is in form of particles.

3. The oat derived composition according to claim 1 or 2, wherein 2-9% by dry weight of the composition, of the dietary fiber is β-glucan.

4. The oat derived composition according to any one of the previous claims, wherein 5-15%, by dry weight of the composition, of the carbohydrates are sugars.

5. The oat derived composition according to any one of claims 1 to 4, further comprising, by dry weight of the composition,
0-15%, preferably 2-10% of ash.

6. The oat derived composition according to any one of the previous claims, wherein the water content of the composition is 1-20% by weight of the composition, or 5-15%, or 5-10%.

7. The oat derived composition according to claim 5 or 6, wherein 50% or more, such as 60% or more, or 90% or more, by weight of the sugar of the composition is maltose.

8. The oat derived composition according to any one of claims 2 to 7, wherein individual particles of the oat derived composition are **characterized by** a content of the composition.

9. The oat derived composition according to claim 6 in form of a powder.

10. Method (1) for manufacturing the oat derived composition according to any one of claims 1 to 9, the method comprising:
providing (10) an aqueous oat slurry comprising 10-30% by weight of micronised oats,
separating (12), from the aqueous oat slurry, preferably by decanting, centrifugation, or filtration:
a water rich fibre depleted slurry, and
a water depleted fibre rich slurry comprising the oat derived composition and having a content of dry matter of 20-40%,
drying (14) the water depleted fibre rich slurry to a content of dry matter of 80-99%, preferably 85-95%,
thereby obtaining the oat derived composition.

11. The method for manufacturing the oat derived composition according to claim 10,
wherein a major part of the weight of the composition consists of particles having sizes within the range from 90 µm to 1 mm, thereby providing a powder.

12. The method for manufacturing the oat derived composition according to claim 10 or 11, wherein said drying and/or said providing a powder is performed using a flash dryer.

13. The method for manufacturing the oat derived composition according to anyone of claims 10 to 12, wherein said separating is preceded by: treating the aqueous oat slurry such that at least a portion of starch from the micronized oats are degraded.

14. The method for manufacturing the oat derived composition according to claim 13, wherein said treating the aqueous oat slurry such that at least a portion of starch from the micronized oats are degraded, is performed by contacting the aqueous oat slurry with amylase.

15. Use of the oat derived composition according to any one of claims 1 to 9, or manufactured by the method according to any one of claims 10 to 14, as food additive or ingredient, or for food manufacturing.
